# FASCICULE DE BREVET EUROPEEN

(11) **EP 2 517 452 B1**
(45) Date de publication et mention de la délivrance du brevet: **06.11.2013**
(21) Numéro de dépôt: 10812872.9
(22) Date de dépôt: 21.12.2010
(51) Int. Cl.: H04N 5/00, H04N 7/16, G06F 9/445, G06F 21/00, H04H 60/23, H04N 21/418, H04N 21/4623, H04N 21/262, H04N 21/458, H04N 21/6543, H04N 21/845

(54) **PROCÉDÉ DE MISE À JOUR D'UN PROCESSEUR DE SÉCURITÉ, SYSTÈME, PROGRAMME D'ORDINATEUR ET PROCESSEUR DE SÉCURITÉ CORRESPONDANTS**
VERFAHREN ZUR AKTUALISIERUNG EINES SICHERHEITSPROZESSORS, ZUGEHÖRIGES SYSTEM, COMPUTERPROGRAMM UND SICHERHEITSPROZESSOR
METHOD FOR UPDATING A SECURITY PROCESSOR, AND CORRESPONDING SYSTEM, COMPUTER PROGRAM AND SECURITY PROCESSOR

(30) Priorité: 23.12.2009 FR 0959511
(43) Date de publication de la demande: 31.10.2012
(73) Titulaire: Viaccess, 92057 Paris La Defense Cedex (FR)
(72) Inventeur: PRESTY, Renaud, F-92130 Issy Les Moulineaux (FR); GRANET, Olivier, F-92150 Surèsnes (FR)
(74) Mandataire: Blot, Philippe Robert Emile
(86) Numéro de dépôt international: PCT/FR2010/052845
(87) Numéro de publication internationale: WO 2011/086286

(56) Documents cités:
- EP-A1- 2 015 561
- WO-A1-01/19087
- FR-A1- 2 797 548
- US-A1- 2004 107 349
- KAMPERMAN F ET AL: "CONDITIONAL ACCESS SYSTEM INTEROPERABILITY THROUGH SOFTWARE DOWNLOADING", IEEE TRANSACTIONS ON CONSUMER ELECTRONICS, IEEE SERVICE CENTER, NEW YORK, NY, US LNKD- DOI:10.1109/30.920419, vol. 47, no. 1, 1 février 2001 (2001-02-01), pages 47-54, XP001200473, ISSN: 0098-3063

## Description

La présente invention concerne un procédé de mise à jour d'un processeur de sécurité.

Elle concerne également un système de mise à jour, un programme d'ordinateur et un processeur de sécurité correspondants.

L'invention s'applique en particulier à la mise à jour d'un processeur de sécurité pour un décodeur propre à recevoir et désembrouiller un signal multimédia embrouillé, ledit signal multimédia étant diffusé par une tête de réseau et ledit processeur comportant une mémoire contenant un code d'une application qui, lorsqu'il est exécuté ou interprété par un microprocesseur, permet d'exécuter un ensemble d'opérations nécessaires au désembrouillage du signal multimédia embrouillé, ledit procédé comprenant une étape de téléchargement d'au moins un module du code à partir de la tête de réseau.

Un décodeur du type précité fait partie d'un système d'accès conditionnel tel que divulgué dans le document « Functional model of a conditional access system », EBU Project Group B/CA, Winter 1995.

L'invention s'applique notamment au domaine de la télévision à péage. Dans ce cadre, le décodeur muni du processeur de sécurité constitué à titre d'exemple d'une carte à puce se trouve chez les clients et sa durée de vie sur le terrain dépasse généralement cinq ans.

Face à des besoins de correction et/ou d'évolution, il est nécessaire de disposer d'un procédé de mise à jour du processeur de sécurité chez le client sans aucune intervention de la part de ce dernier, en téléchargeant dans le processeur de sécurité les parties du code nécessitant une mise à jour.

Les procédés conventionnels de téléchargement de code de microprocesseur sont de deux types.

Le premier type de téléchargement conventionnel consiste à effectuer le téléchargement grâce à un mécanisme dans l'applicatif du processeur de sécurité permettant de télécharger un code supplémentaire et de re-router certaines fonctions du code existant vers le code téléchargé.

Ce premier type de téléchargement pose des problèmes de sécurité. En effet, il est possible de re-router l'intégralité des fonctions du code existant vers un nouveau code de remplacement et de télécharger un nouveau code qui permet de vider le contenu des mémoires. De plus, si le mécanisme de téléchargement présente un bogue ou une faille de sécurité, l'ensemble du code du processeur de sécurité est exposé à des attaques.

Le deuxième type de téléchargement conventionnel consiste à utiliser un mécanisme dans le système d'exploitation du processeur de sécurité pour remplacer l'intégralité du code existant par un nouveau code de remplacement. Dans ce cas également, en cas de bogue ou de faille de sécurité du mécanisme, l'ensemble du code du processeur de sécurité est exposé à des attaques.

Le document WO 2004/051983 décrit un procédé de sécurisation des mises à jour du code d'un processeur de sécurité du type précité en téléchargeant au moins un module du code chiffré à l'aide d'un clé publique qui est invalidée après la mise à jour.

Ce procédé présente l'inconvénient lors de l'épuisement des clés publiques stockées, de nécessiter une mise à jour d'au moins une nouvelle clé publique de chiffrement, ce qui introduit ainsi une faille de sécurité potentielle au niveau du téléchargement de cette clé.

Le but de l'invention est donc de résoudre ces problèmes.

A cet effet, l'invention a pour objet un procédé de mise à jour d'un processeur de sécurité pour un décodeur propre à recevoir et désembrouiller un signal multimédia embrouillé, ledit signal multimédia étant diffusé par une tête de réseau et ledit processeur comportant une mémoire contenant un code d'une application qui, lorsqu'il est exécuté ou interprété par un microprocesseur, permet d'exécuter un ensemble d'opérations nécessaires au désembrouillage du signal multimédia embrouillé, ledit procédé comprenant une étape de téléchargement d'au moins un module du code à partir de la tête de réseau, caractérisé en ce que l'étape de téléchargement du module comprend les sous-étapes de :
- chiffrement, par la tête de réseau, du module à l'aide d'une clé et d'un algorithme de chiffrement propres audit module ;
- découpage, par la tête de réseau, du module en une pluralité de blocs de taille propre audit module ;
- intégration, par la tête de réseau, de chacun des blocs du module dans un message spécifique ;
- diffusion, par la tête de réseau vers le décodeur, de chacun de ces messages ;
- réception de ces messages par le décodeur ;
- extraction, par le processeur de sécurité du décodeur, des blocs du module à partir de ces messages ;
- déchiffrement, par le processeur de sécurité, des blocs du module;
- stockage, par le processeur de sécurité, des blocs du module dans un espace de la mémoire dédié audit module ; et
- obtention à partir de ces blocs d'un module de code mis à jour.

Suivant des modes particuliers de réalisation, le procédé comprend une ou plusieurs des caractéristiques suivantes, prise(s) isolément ou suivant toutes les combinaisons techniquement possibles :
- l'étape de téléchargement du module comprend en outre les sous-étapes de :
   - chiffrement, par la tête de réseau, des messages contenant les blocs du module à l'aide de clés de transport propres au module ; et
   - déchiffrement, par le processeur de sécurité, des messages contenant les blocs du module.
- les messages contenant les blocs du module sont choisis de type ECM (« Entitlement Control Message ») et/ou EMM (« Entitlement Management Message ») selon un choix propre au module.
- il comprend outre une étape d'activation, par le processeur de sécurité, du module téléchargé stocké dans la mémoire.
- l'étape d'activation du module téléchargé est déclenchée par le processeur de sécurité automatiquement ou suite à la réception d'un ordre d'activation émis depuis le décodeur ou depuis la tête de réseau.
- le module est développé et compilé dans un langage et à l'aide d'un compilateur propres au module.

L'invention a également pour objet un système de mise à jour d'un processeur de sécurité pour un décodeur propre à recevoir et désembrouiller un signal multimédia embrouillé, ledit signal multimédia étant diffusé par une tête de réseau et ledit processeur comportant une mémoire contenant un code d'une application qui, lorsqu'il est exécuté ou interprété par un microprocesseur, permet d'exécuter un ensemble d'opérations nécessaires au désembrouillage du signal multimédia embrouillé, ledit système comprenant des moyens de téléchargement d'au moins un module du code à partir de la tête de réseau, caractérisé en ce que les moyens de téléchargement du module comprennent :
au niveau de la tête de réseau :
   - des moyens de chiffrement du module à l'aide d'une clé et d'un algorithme de chiffrement propres audit module ;
   - des moyens de découpage du module en une pluralité de blocs de taille propre audit module ;
   - des moyens d'intégration de chacun des blocs du module dans un message spécifique ; et
   - des moyens de diffusion vers le décodeur de chacun de ces messages
au niveau du décodeur, des moyens de réception de ces messages ; et
au niveau du processeur de sécurité :
   - des moyens d'extraction des blocs du module à partir de ces messages ;
   - des moyens de déchiffrement des blocs du module;
   - des moyens de stockage des blocs du module dans un espace de la mémoire dédié audit module ; et
   - des moyens d'obtention à partir de ces blocs d'un module de code mis à jour. L'invention a encore pour objet un programme d'ordinateur comportant des instructions de code, qui, lorsque ce programme est exécuté sur un ordinateur, permettent la mise en oeuvre du procédé de mise à jour d'un processeur de sécurité.

Suivant des modes particuliers de réalisation, le programme d'ordinateur comprend une ou plusieurs des caractéristiques suivants prise(s) isolément ou suivant toutes les combinaisons techniquement possibles :
- il comprend un sous-programme exécuté par une tête de réseau pour permettre la mise en oeuvre des sous-étapes de l'étape de téléchargement du module consistant à :
- chiffrer le module à l'aide d'une clé et d'un algorithme de chiffrement propres audit module ;
- découper le module en une pluralité de blocs de taille propre audit module ;
- intégrer chacun des blocs du module dans un message spécifique ; et
- diffuser vers le décodeur chacun de ces messages.
- il comprend un sous-programme exécuté ou interprété par un processeur de sécurité pour permettre la mise en oeuvre des sous-étapes de l'étape de téléchargement du module consistant à :
- extraire les blocs du module à partir de ces messages ;
- déchiffrer les blocs du module;
- stocker les blocs du module dans un espace de la mémoire dédié audit module ; et
- obtenir à partir de ces blocs un module de code mis à jour.

L'invention a également pour objet un processeur de sécurité, caractérisé en ce qu'il est apte à exécuter ou à interpréter le code d'un sous-programme pour permettre la mise en oeuvre des sous-étapes de l'étape de téléchargement du module consistant à :
- extraire les blocs du module à partir de ces messages ;
- déchiffrer les blocs du module;
- stocker les blocs du module dans un espace de la mémoire dédié audit module ; et
- obtenir à partir de ces blocs un module de code mis à jour.

Ainsi, l'invention permet de remédier aux inconvénients précités des procédés de l'état de la technique en proposant un mécanisme de téléchargement du code d'un processeur de sécurité disposant d'éléments différentiateurs prédéfinis pour chaque étape du téléchargement en fonction du module de code à télécharger.

L'invention sera mieux comprise à la lecture de la description qui va suivre, donnée uniquement à titre d'exemple et faite en se référant aux dessins annexés sur lesquels :
- la figure 1 est un schéma synoptique illustrant la structure d'un système d'accès conditionnel conventionnel dans lequel l'invention est mise en oeuvre ;
- la figure 2 est un organigramme illustrant le fonctionnement du procédé de mise à jour d'un processeur de sécurité selon l'invention ;
- la figure 3 est un organigramme illustrant les étapes du procédé de mise à jour relatives à la génération des messages de mise à jour du code du processeur de sécurité ; et
- la figure 4 est un organigramme illustrant les étapes du procédé de mise à jour mises en oeuvre par le processeur de sécurité du décodeur du système d'accès conditionnel.

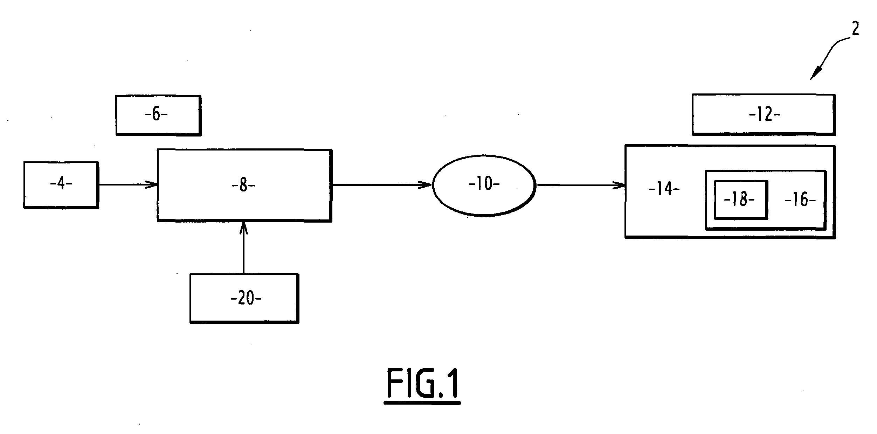

La figure 1 représente la structure d'un système d'accès conditionnel 2 permettant la transmission de signaux multimédia embrouillés. Ces signaux multimédia sont, par exemple, des signaux audiovisuels correspondant à des programmes audiovisuels de chaînes de télévision générés par au moins un opérateur 4.

Le système 2 comprend une tête de réseau 6 comprenant des moyens de multiplexage et d'embrouillage 8 adaptés pour embrouiller les signaux multimédia 4 qui sont ensuite transmis par la tête de réseau 6 vers un grand nombre de récepteurs par l'intermédiaire d'un réseau 10 de transmission d'informations, par exemple un réseau hertzien ou un réseau câblé.

Pour simplifier la figure 1, seul un récepteur 12 est représenté.

Le récepteur 12 comprend un décodeur 14 propre à recevoir et désembrouiller les signaux multimédia embrouillés transmis depuis la tête de réseau 6.

Le décodeur 14 comprend un processeur de sécurité 16, par exemple une carte à puce, comprenant une mémoire 18 contenant un code d'une application permettant d'exécuter un ensemble d'opérations nécessaires au désembrouillage du signal multimédia embrouillé. Le code de cette application comporte typiquement plusieurs modules de code correspondant à des groupements de sous-programmes ou fonctions distincts. Ces sous-programmes ou fonctions peuvent être de diverses natures, et sont par exemple des algorithmes de chiffrement ou de vérification d'authentification , des analyseurs lexicaux de messages à traiter, des modules d'enregistrement de titres d'accès. Le découpage de l'application en modules de codes prédéfinis est réalisé selon l'arbitrage de l'architecte logiciel pendant la phase de conception.

En outre, le système 2 d'accès conditionnel comprend des moyens de génération de messages d'accès conditionnel 20 de type ECM (« Entitlement Control Message ») et EMM (« Entitlement Management Message »).

Les moyens de multiplexage et d'embrouillage 8 de la tête de réseau 6 permettent de multiplexer ces messages d'accès conditionnel avec les signaux multimédia embrouillés dans un même paquet d'informations.

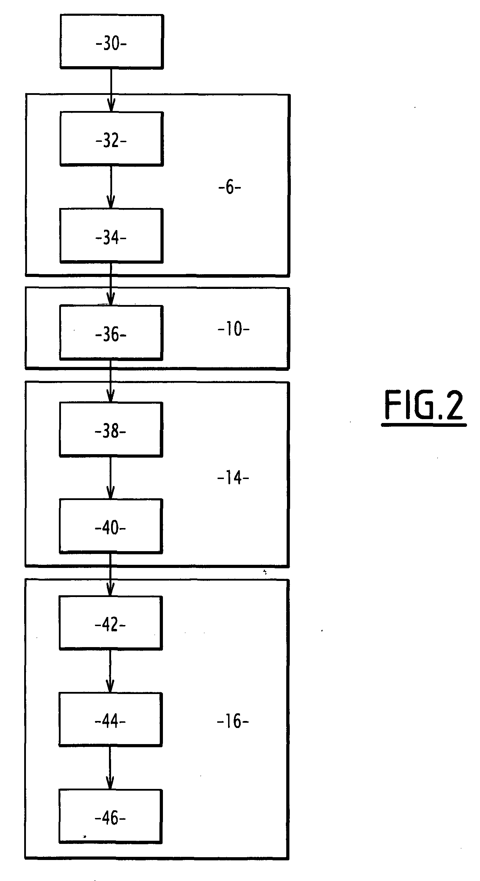

La figure 2 illustre le fonctionnement du procédé de mise à jour du processeur de sécurité 16 du décodeur 14 selon l'invention.

Le procédé de mise à jour commence par une étape 30 d'identification du ou des modules de code devant être téléchargés en remplacement d'un ou de modules existants pour effectuer la mise à jour du processeur de sécurité. Cette étape 30 permet de déclencher les étapes suivantes de téléchargement du ou des modules identifiés.

En 32, la tête de réseau 6 réalise un formatage du ou des modules à télécharger selon un format propre (par exemple valeurs hexadécimales du code binaire codé en ASCII, balises marquant le début ou la fin du bloc de code, nombre de lignes, présence de retour à la ligne ...) à chaque module. Au cours de cette étape 32, la tête de réseau 6 chiffre le ou les modules à l'aide d'une clé et d'un algorithme de chiffrement propres à chaque module. Ainsi, à l'issue de l'étape 32, les modules à télécharger sont protégés en intégrité et/ou en confidentialité.

En 34, la tête de réseau 6 découpe chacun des modules à télécharger en blocs de taille propre audit module et intègre chacun des blocs dans un message spécifique de type EMM ou ECM, chaque module pouvant accepter un type de message et ne pas accepter l'autre ou bien pouvant accepter les deux types de messages.

Ainsi, grâce à l'assoclation d'une taille de bloc propre à chaque module, un bloc d'un module donné n'est pas utilisable pour un autre module.

En 34 également, la tête de réseau 6 codifie les entêtes de tous les messages comprenant les blocs de données d'un module donné selon une codification propre audit module. Cette codification permet d'indiquer l'action à réaliser par le processeur de sécurité 16.

Selon un mode de réalisation préféré de l'invention, la tête de réseau 6 chiffre les messages contenant les blocs de chaque module à l'aide de clés de transport propres au module.

En 36, la tête de réseau 6 diffuse à travers le réseau 10, les messages contenant les blocs des modules à télécharger dans un flux de transport de type MPEG 2 (MPEG2-TS) par exemple. Pour cela, la tête de réseau 6 adresse les messages de chaque module à télécharger à tous les abonnés ou à un groupe d'abonnés déterminés ou à un seul abonné suivant des règles d'adressage propres à chaque module. Par exemple, un module peu sensible peut avoir une diffusion globale alors qu'un module critique peut avoir une diffusion très ciblée.

En 38, le décodeur 14 reçoit le flux de transport MPEG 2 comprenant les signaux multimédia et les messages EMM et/ou ECM embrouillés.

Il extrait en 40 les messages contenant les blocs des modules à télécharger. Deux modes de traitement de ces messages par le décodeur 14 sont prévus. Selon le premier mode, le décodeur 14 stocke tous les messages contenant tous les blocs des modules à télécharger et les transmet ensuite en une fois au processeur de sécurité 16. Selon le deuxième mode, le décodeur 14 transmet au processeur de sécurité 16 les messages dès réception. Selon l'invention, chaque module de code est associé à un traitement spécifique, parmi les deux traitements, de la part du décodeur 14.

En 42, le processeur de sécurité 16 vérifie et déchiffre les messages contenant les blocs de chaque module à l'aide des propriétés associées audit module. Il extrait les blocs du module à partir de ces messages. Ensuite, il déchiffre et vérifie l'intégrité de tous les blocs.

En 44, le processeur de sécurité 16 stocke les blocs de chacun des modules téléchargés dans des espaces de la mémoire 18 propres à chaque module. Lors du stockage, chaque module peut en outre disposer de son propre format de stockage.

Les modules stockés sont de préférence protégés en intégrité afin d'assurer qu'ils ne seront pas corrompus lors de leur exécution.

Selon un mode de réalisation de l'invention, chaque module dispose de sa propre clé et de son propre algorithme d'intégrité et procède à des vérifications d'intégrité à différents moments par exemple, lors d'un accès, d'une lecture, d'une exécution, d'une commande, d'une réinitialisation ...

En outre, chaque module stocké est de préférence protégé en accès afin qu'aucun autre module ne puisse venir l'exécuter sans autorisation. Selon l'invention, chaque module dispose de préférence de ses propres règles d'accès en utilisant des techniques de protection conventionnelles de type pare-feu (« firewall ») ou d'une protection via MPU/MMU (« Memory Protection Unit/Memory Management Unit »).

En 46, le processeur de sécurité 16 active les modules de code téléchargés stockés dans la mémoire 18 automatiquement ou suite à la réception d'un ordre d'activation émis depuis le décodeur 14 ou depuis la tête de réseau 6. Selon l'invention, chaque module dispose de préférence de ses propres règles d'activation.

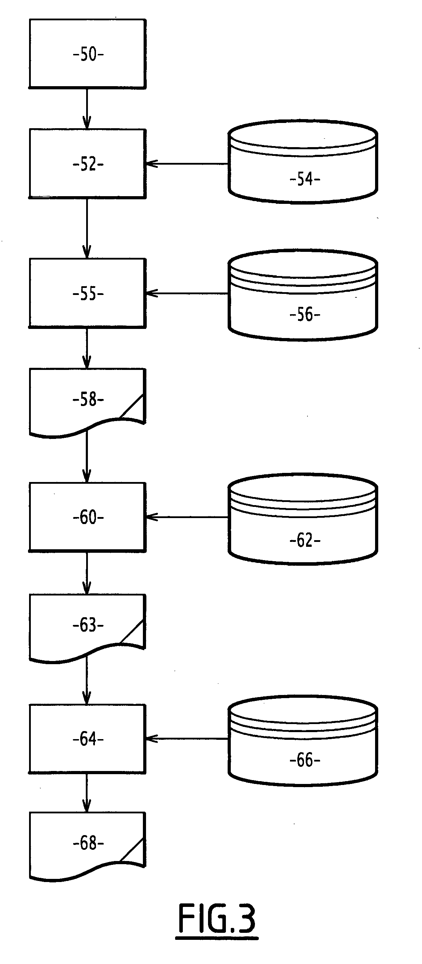

La figure 3 détaille les étapes permettant de générer les messages de mise à jour du code du processeur de sécurité 16. Le code du processeur de sécurité 16 est découpé en un nombre déterminé N de modules, les N modules formant la totalité du code. En 50, une décision est prise de mettre à jour le code du processeur de sécurité 16 afin de le faire évoluer ou de lui apporter des corrections.

En 52, le ou les modules à modifier sont identifiés à partir d'une liste 54 des N modules de code.

En 55, les modules à modifier sont développés et compilés. Chaque module possède un mécanisme de mise à jour, un langage (par exemple, le langage C) et un compilateur (par exemple un compilateur standard ANSI) qui lui sont dédiés et qui sont regroupés en 56.

A titre d'exemples de mécanismes de mise à jour, il peut s'agir :
- d'une mise à jour partielle par tables d'indirection i.e. que l'adresse d'une fonction est remplacée par une nouvelle adresse stockée dans la table d'indirection ; ou
- d'une mise à jour partielle par remplacement de blocs de code existants ; ou encore,
- d'une mise à jour complète du module.

L'étape 55 de développement et de compilation résulte en un code natif binaire 58 des modules à modifier.

En 60, la tête de réseau 6 définit un identifiant de la mise à jour selon un format propre à chaque module concerné et protège le code binaire 58 en intégrité et en confidentialité selon des propriétés 62 propres à chaque module.

A titre d'exemples de format d'identifiant de la mise à jour, il peut s'agir d'un identifiant sur 10 caractères ASCII = MOD1_1.6.9 ou d'un identifiant sur 7 caractères ASCII = 230MOD2. Il est également possible de ne pas prévoir d'identifiant de la mise à jour pour certains modules.

A titre d'exemples de l'algorithme et de la clé de la protection en confidentialité, il peut s'agir d'un algorithme AES CBC avec une clé dédiée stockée en dur dans le code initial du processeur de sécurité 16 ou d'un algorithme 3DES CBC. Il est également possible de ne pas prévoir de protection en confidentialité du module.

A titre d'exemples de l'algorithme et de la clé d'intégrité, il peut s'agir d'une intégrité AES-MAC avec une clé dédiée ou stockée en dur dans le code initial du processeur de sécurité 16 ou d'une intégrité 3DES MAC avec des clés communes à tous les processeurs de sécurité de tous les décodeurs des abonnés. Il est également possible de ne pas prévoir de protection en intégrité du module.

Le résultat de l'étape 60 est un code 63 des modules à modifier identifié et chiffré (i.e. protégé en confidentialité et en intégrité).

En 64, la tête de réseau 6 fabrique les messages de diffusion des blocs des modules à modifier en découpant le code binaire identifié et chiffré 63 en blocs, en intégrant ces blocs dans des messages EMM et/ou ECM et en chiffrant ces messages.

L'étape 64 utilise des propriétés 66 propres à chaque module. Les propriétés 66 concernent le type de messages utilisé (EMM ou ECM), les règles d'adressage (à un seul abonné, à un groupe d'abonnés ou à tous les abonnés), les clés de transport utilisées pour chiffrer les messages (par exemple, des clés spécifiques possédées par la société déposante ou bien les mêmes clés que celles utilisées pour transporter des droits de l'abonné ou bien les clés d'exploitation), la taille des blocs (par exemple taille fixe de 128 ou de 200 octets ou taille variable) et le format d'entête des messages (par exemple, format « TLV » qui correspond à un codage « Type, Longueur, Valeur » avec T = '56 et L = '80, ou T = '57 ou T = 'AO).

L'étape 64 résulte en une pluralité de messages 68 prêts à être diffusés par la tête de réseau 6.

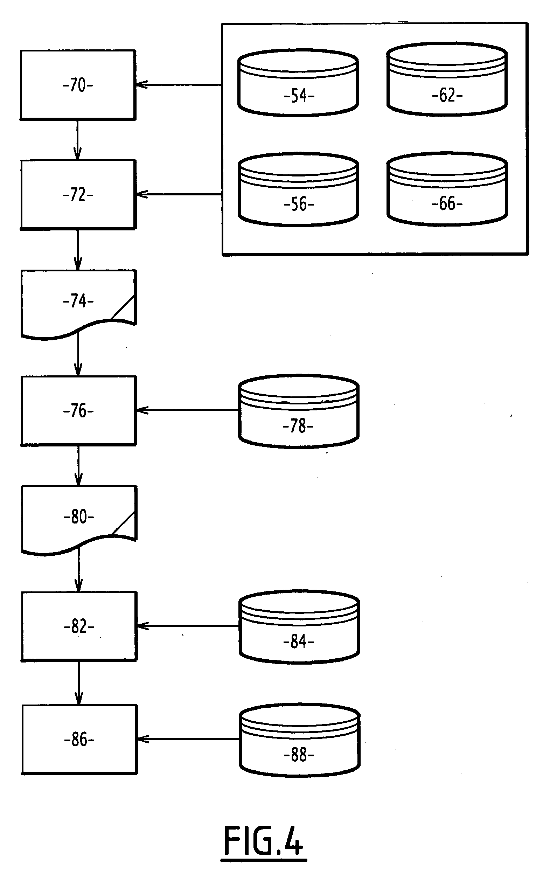

La figure 4 détaille les étapes du procédé selon l'invention mises en oeuvre par le processeur de sécurité 16.

En 70, le processeur de sécurité 16 détermine à la réception d'un message EMM ou ECM si un tel message contient des blocs de mise à jour d'un module de code en fonction des types d'adressage des différents modules.

En 72, le processeur de sécurité 16 identifie le module concerné à l'aide des paramètres reçus associés à ce module.

Les étapes 70 et 72 utilisent ainsi la liste 54 des N modules, et les propriétés 56, 62 et 66 de chaque module.

Le résultat de ces étapes est un ensemble de modules identifiés 74.

En 76, le processeur de sécurité 16 décide à partir de propriétés 78 de réception et de traitement de chaque module, s'il doit traiter le bloc reçu du module immédiatement ou si le traitement des blocs du module doit commencer après avoir reçu l'intégralité des blocs.

L'étape 76 résulte en un ensemble de blocs de code 80 pouvant être traités par le processeur de sécurité 16.

En 82, le processeur de sécurité déchiffre et stocke les blocs de code de l'ensemble 80 dans des espaces dédiés aux différents modules dans la mémoire 18. Cette étape 82 utilise des propriétés de stockage 84 de chaque module.

Les propriétés de stockage 84 concernent l'espace mémoire dédié (par exemple une zone de taille fixe ou variable par réallocation dynamique, ou bien pas de zone dédiée), le format de stockage (par exemple stockage des blocs de façon contiguë et ordonnée ou stockage des blocs en FIFO), la protection éventuelle en confidentialité et/ou en intégrité des blocs du module (par exemple en utilisant des algorithmes de protection en confidentialité AES CBC ou 3DES CBC et en intégrité AES MAC ou 3DES MAC), la protection éventuelle en accès lecture ou lecture/écriture des blocs du module (par exemple via un microprocesseur du processeur de sécurité 16 avec un accès restreint au module en écriture).

En 86, le processeur de sécurité active chacun des modules mis à jour stockés dans la mémoire 18 en utilisant des propriétés d'activation 88 propres à chaque module. A titre d'exemples, il peut s'agir d'une activation immédiate suite à la réception de tous les blocs du module ou d'une activation suite à la réception d'un ordre d'activation émis depuis la tête de réseau 6 contenu dans un message EMM ou ECM ou bien émis depuis le décodeur 14.

Ainsi, le procédé selon l'invention fournit une solution de téléchargement de code d'un processeur de sécurité disposant d'éléments différentiateurs pour chaque étape définie en fonction du module de code à télécharger.

La solution de l'invention permet ainsi de disposer d'un processus unique et centralisé de haut niveau dont la robustesse est validée une fois pour toute pour une meilleure sécurité du processeur de sécurité.

Cette solution permet également d'améliorer la sécurité en cloisonnant le risque d'une faille de sécurité. Ainsi, une faille sur une étape du mécanisme de sécurité peut être exploitable sur un module de code mais inexploitable sur les autres modules.

La solution de l'invention permet en outre d'améliorer la sécurité globale du processeur de sécurité dans le cas d'une ingénierie inverse, d'un des mécanismes différentiés proposés. L'ingénierie inverse d'un mécanisme de sécurité ne permet ainsi pas de faire l'ingénierie inverse des autres mécanismes.

Le procédé de l'invention comporte des programmes d'ordinateur correspondants et s'applique avantageusement dans le cadre de la télévision payante (« Pay TV ») afin d'améliorer la sécurité et la correction des failles sécuritaires des mécanismes de sécurité mis en oeuvre dans le processeur de sécurité (une carte à puce généralement).

Bien entendu, d'autres modes de réalisation et applications sont encore envisageables.

## Revendications

1. Procédé de mise à jour d'un processeur de sécurité (16) pour un décodeur (14) propre à recevoir et désembrouiller un signal multimédia embrouillé, ledit signal multimédia étant diffusé par une tête de réseau (6) et ledit processeur (16) comportant une mémoire (18) contenant un code d'une application qui, lorsqu'il est exécuté ou interprété par un microprocesseur, permet d'exécuter un ensemble d'opérations nécessaires au désembrouillage du signal multimédia embrouillé, ledit procédé comprenant une étape de téléchargement d'au moins un module du code à partir de la tête de réseau (6), **caractérisé en ce que** l'étape de téléchargement du module comprend les sous-étapes de :
- chiffrement (32), par la tête de réseau (6), du module à l'aide d'une clé et d'un algorithme de chiffrement propres audit module ;
- découpage (34, 64), par la tête de réseau (6), du module en une pluralité de blocs de taille propre audit module extraite d'un ensemble mémorisé de propriétés (66) propres audit module ;
- intégration (34, 64), par la tête de réseau (6), de chacun des blocs du module dans un message spécifique ;
- diffusion (36), par la tête de réseau (6) vers le décodeur (14), de chacun de ces messages ;
- réception (38, 70) de ces messages par le décodeur (14) ;
- extraction (42 , 72), par le processeur de sécurité (16) du décodeur (14), des blocs du module à partir de ces messages ;
- déchiffrement (42, 82), par le processeur de sécurité (16), des blocs du module;
- stockage (44, 82), par le processeur de sécurité (16), des blocs du module dans un espace de la mémoire (18) dédié audit module ; et
- obtention à partir de ces blocs d'un module de code mis à jour.

2. Procédé de mise à jour selon la revendication 1, **caractérisé en ce que** l'étape de téléchargement du module comprend en outre les sous-étapes de :
- chiffrement (34), par la tête de réseau (6), des messages contenant les blocs du module à l'aide de clés de transport propres au module ; et
- déchiffrement (42), par le processeur de sécurité (16), des messages contenant les blocs du module.

3. Procédé de mise à jour selon la revendication 1 ou 2, **caractérisé en ce que** les messages contenant les blocs du module sont choisis de type ECM (« Entitlement Control Message ») et/ou EMM (« Entitlement Management Message ») selon un choix propre au module.

4. Procédé de mise à jour selon l'une quelconque des revendications précédentes, **caractérisé en ce qu'**il comprend en outre une étape d'activation (46), par le processeur de sécurité (16), du module téléchargé stocké dans la mémoire (18).

5. Procédé de mise à jour selon la revendication 4, **caractérisé en ce que** l'étape d'activation (46) du module téléchargé est déclenchée par le processeur de sécurité (16) automatiquement ou suite à la réception d'un ordre d'activation émis depuis le décodeur (14) ou depuis la tête de réseau (6).

6. Procédé de mise à jour selon l'une quelconque des revendications précédentes, **caractérisé en ce que** le module est développé et compilé dans un langage et à l'aide d'un compilateur propres au module.

7. Système de mise à jour d'un processeur de sécurité (16) pour un décodeur (14) propre à recevoir et désembrouiller un signal multimédia embrouillé, ledit signal multimédia étant diffusé par une tête de réseau (6) et ledit processeur (16) comportant une mémoire (18) contenant un code d'une application qui, lorsqu'il est exécuté ou interprété par un microprocesseur, permet d'exécuter un ensemble d'opérations nécessaires au désembrouillage du signal multimédia embrouillé, ledit système comprenant des moyens de téléchargement d'au moins un module du code à partir de la tête de réseau (6), **caractérisé en ce que** les moyens de téléchargement du module comprennent :
au niveau de la tête de réseau (6):
- des moyens de chiffrement du module à l'aide d'une clé et d'un algorithme de chiffrement propres audit module ;
- des moyens de découpage du module en une pluralité de blocs de taille propre audit module extraite d'un ensemble mémorisé de propriétés (66) propres audit module;
- des moyens d'intégration de chacun des blocs du module dans un message spécifique ; et
- des moyens de diffusion vers le décodeur (14) de chacun de ces messages
au niveau du décodeur (14), des moyens de réception de ces messages ; et
au niveau du processeur de sécurité (16):
- des moyens d'extraction des blocs du module à partir de ces messages ;
- des moyens de déchiffrement des blocs du module;
- des moyens de stockage des blocs du module dans un espace de la mémoire (18) dédié audit module ; et
- des moyens d'obtention à partir de ces blocs d'un module de code mis à jour.

8. Programme d'ordinateur comportant des instructions de code, qui, lorsque ce programme est exécuté sur un ordinateur, permettent la mise en oeuvre du procédé de mise à jour d'un processeur de sécurité (16) selon l'une quelconque des revendications 1 à 6.

9. Programme d'ordinateur selon la revendication 8, **caractérisé en ce qu'**il comprend un sous-programme exécuté par une tête de réseau (6) pour permettre la mise en oeuvre des sous-étapes de l'étape de téléchargement du module consistant à :
- chiffrer le module à l'aide d'une clé et d'un algorithme de chiffrement propres audit module ;
- découper le module en une pluralité de blocs de taille propre audit module ;
- intégrer chacun des blocs du module dans un message spécifique ; et
- diffuser vers le décodeur (14) chacun de ces messages.

10. Programme d'ordinateur selon la revendication 8 ou 9, **caractérisé en ce qu'**il comprend un sous-programme exécuté ou interprété par un processeur de sécurité (16) pour permettre la mise en oeuvre des sous-étapes de l'étape de téléchargement du module consistant à :
- extraire les blocs du module à partir de ces messages, utilisant une taille de blocs propre audit module extraite d'un ensemble mémorisé de propriétés (66) propres audit module;
- déchiffrer les blocs du module;
- stocker les blocs du module dans un espace de la mémoire (18) dédié audit module ; et
- obtenir à partir de ces blocs un module de code mis à jour.

11. Processeur de sécurité (16), **caractérisé en ce qu'**il est apte à exécuter ou à interpréter le code d'un sous-programme pour permettre la mise en oeuvre des sous-étapes de l'étape de téléchargement du module conformément à la revendication 10.

## Patentansprüche

1. Verfahren zum Aktualisieren eines Sicherheitsprozessors (16) für einen Dekodierer (14), der in der Lage ist, ein gescrambeltes Multimediasignal zu empfangen und zu descrambeln, wobei das Multimediasignal mittels einer Netz-Kopfstation (6) gesandt ist und wobei der Prozessor (16) einen Speicher (18) aufweist, der einen Code einer Anwendung enthält, der, wenn er von einem Mikroprozessor ausgeführt oder interpretiert wird, es erlaubt, eine Gruppe von Vorgängen auszuführen, die notwendig sind zum Descramblen des gescrambelten Multimediasignals, wobei das Verfahren einen Schritt des Ladens wenigstens eines von der Netz-Kopfstation (6) ausgehenden Codemoduls aufweist, **dadurch gekennzeichnet, dass** der Schritt des Ladens des Moduls die Unterschritte aufweist:
- Verschlüsselung (32), mittels der Netz-Kopfstation (6), des Moduls mit Hilfe eines Schlüssels und eines Verschlüsselungsalgorithmus, die zu dem besagten Modul zugehörig sind,
- Aufteilung (34, 36)), mittels der Netz-Kopfstation (6), des Moduls in eine Mehrzahl von Blöcken einer zu dem Modul zugehörigen Größe, die aus einer gespeicherten Gruppe von zu dem Modul zugehörigen Eigenschaften (66) entnommen ist,
- Integration (34, 64), mittels der Netz-Kopfstation (6), jedes der Modulblöcke in eine spezifische Nachricht,
- Sendung (36), mittels der Netz-Kopfstation (6) zu dem Dekodierer hin (6), jeder dieser Nachrichten,
- Empfang (38, 70) dieser Nachrichten von dem Dekodierer (14),
- Extraktion (42, 72), mittels des Sicherheitsprozessors (16) des Dekodierers (14), der Modulblöcke ausgehend von diesen Nachrichten,
- Entschlüsselung (42, 82), mittels des Sicherheitsprozessors (16), dieser Modulblöcke,
- Speicherung (44, 82), mittels des Sicherheitsprozessors (16), der Modulblöcke in einem dem besagten Modul zugeordneten Bereich des Speichers (18), und
- Erlangung eines aktualisierten Codemoduls ausgehend von diesen Blöcken.

2. Verfahren zum Aktualisieren gemäß Anspruch 1, **dadurch gekennzeichnet, dass** der Schritt des Ladens des Moduls ferner aufweist die Unterschritte:
- Verschlüsselung (34), mittels der Netz-Kopfstation (6), der die Modulblöcke enthaltenden Nachrichten mit Hilfe von dem Modul zugehörigen Transportschlüsseln, und
- Entschlüsselung (42), mittels des Sicherheitsprozessors (16), der die Modulblöcke enthaltenden Nachrichten.

3. Verfahren zum Aktualisieren gemäß Anspruch 1 oder 2, **dadurch gekennzeichnet, dass** die die Modulblöcke enthaltenden Nachrichten gewählt sind vom Typ ECM ("Entitlement Control Message") und/oder EMM ("Entitlement Management Message") gemäß einer zu dem Modul zugehörigen Wahl.

4. Verfahren zum Aktualisieren gemäß irgendeinem der vorhergehenden Ansprüche, **dadurch gekennzeichnet, dass** es ferner aufweist einen Schritt der Aktivierung (46), mittels des Sicherheitsprozessors (16), des geladenen, im Speicher (18) gespeicherten Moduls.

5. Verfahren zum Aktualisieren gemäß Anspruch 4, **dadurch gekennzeichnet, dass** der Schritt der Aktivierung (46) des geladenen Moduls von dem Sicherheitsprozessor (16) automatisch oder auf den Erhalt einer Aktivierungsanweisung ausgelöst wird, die von dem Dekodierer (14) oder von der Netz-Kopfstation (6) ausgesandt ist.

6. Verfahren zum Aktualisieren gemäß irgendeinem der vorhergehenden Ansprüche, **dadurch gekennzeichnet, dass** das Modul mit Hilfe eines zu dem Modul zugehörigen Compilers entwickelt und in eine Sprache kompiliert ist.

7. System zum Aktualisieren eines Sicherheitsprozessors (16) für einen Dekodierer (14), der in der Lage ist, ein gescrambeltes Multimediasignal zu empfangen und zu descrambeln, wobei das besagte Multimedialsignal mittels einer Netz-Kopfstation (6) gesandt ist und wobei der besagte Prozessor (16) einen Speicher (18) aufweist, der einen Code einer Anwendung enthält, der, wenn er von einem Mikroprozessor ausgeführt oder interpretiert wird, es erlaubt, eine Gruppe von Vorgängen auszuführen, die notwendig sind zum Descrambeln des gescrambelten Multimediasignals, wobei das System Mittel zum Laden wenigstens eines von der Netz-Kopfstation (6) ausgehenden Codemoduls aufweist, **dadurch gekennzeichnet, dass** die Mittel zum Laden des Moduls aufweisen:
seitens der Netz-Kopfstation (6):
- Mittel zum Verschlüsseln des Moduls mit Hilfe eines Schlüssels und eines Verschlüsselungsalgorithmus, die zu dem Modul zugehörig sind,
- Mittel zum Aufteilen des Moduls in eine Mehrzahl von Blöcken einer zu dem Modul zugehörigen Größe, die aus einer gespeicherten Gruppe von zu dem Modul zugehörigen Eigenschaften (66) entnommen ist,
- Mittel zur Integration jedes der Modulblöcke in eine spezifische Nachricht, und
- Mittel zur Sendung zu dem Dekodierer (14) hin jeder dieser Nachrichten,
seitens des Dekodierers (14) Mittel zum Empfang dieser Nachrichten, und
seitens des Sicherheitsprozessors (16):
- Mittel zur Extraktion der Modulblöcke ausgehend von diesen Nachrichten,
- Mittel zur Entschlüsselung der Modulblöcke,
- Mittel zur Speicherung der Modulblöcke in einem dem besagten Modul zugeordneten Bereich des Speichers (18), und
- Mittel zur Erlangung eines aktualisierten Codemoduls ausgehend von diesen Blöcken.

8. Computerprogramm, aufweisend Codeinstruktionen, die, wenn das Programm auf einem Computer ausgeführt wird, die Durchführung des Verfahrens zum Aktualisieren eines Sicherheitsprozessors (16) gemäß irgendeinem der Ansprüche 1 bis 6 ermöglichen.

9. Computerprogramm gemäß Anspruch 8, **dadurch gekennzeichnet, dass** es ein von einer Netz-Kopfstation (6) ausgeführtes Unterprogramm aufweist zum Ermöglichen der Durchführung der Unterschritte des Schritts des Ladens des Moduls, bestehend aus:
- Verschlüsseln des Moduls mit Hilfe eines Schlüssels und eines Verschlüsselungsalgorithmus, die zu dem besagten Modul zugehörig sind,
- Aufteilen des Moduls in eine Mehrzahl von Blöcken einer zu dem besagten Modul zugehörigen Größe,
- Integrieren jedes der Blöcke des Moduls in eine spezifische Nachricht, und
- Senden jeder dieser Nachrichten zu dem Dekodierer (14) hin.

10. Computerprogramm gemäß Anspruch 8 oder 9, **dadurch gekennzeichnet, dass** es ein Unterprogramm aufweist, das von einem Sicherheitsprozessor (16) ausgeführt oder interpretiert wird, zum Ermöglichen der Durchführung der Unterschritte des Schritts des Ladens der Moduls, bestehend aus:
- Extrahieren der Modulblöcke ausgehend von diesen Nachrichten, verwendend eine zu dem Modul zugehörige Größe der Blöcke, die von einer Gruppe gespeicherter, zu dem Modul zugehöriger Eigenschaften (66) entnommen ist,
- Verschlüsseln der Modulblöcke,
- Speichern der Modulblöcke in einem dem besagten Modul zugeordneten Bereich des Speichers (18),
und
- Erlangen eines aktualisierten Codemoduls ausgehend von diesen Blöcken.

11. Sicherheitsprozessor (16), **dadurch gekennzeichnet, dass** er in der Lage ist, den Code eines Unterprogramms durchzuführen oder zu interpretieren zum Ermöglichen der Durchführung von Unterschritten des Schritts des Ladens des Moduls gemäß Anspruch 10.

## Claims

1. Method of updating a security processor (16) for a decoder (14) suitable for receiving and unscrambling a scrambled multimedia signal, said multimedia signal being broadcast by a headend (6) and said processor (16) having a memory (18) containing an application code which, when it is run or interpreted by a microprocessor, enables a set of operations necessary for unscrambling the scrambled multimedia signal to be run, said method comprising a step of downloading at least one code module from the headend (6), **characterised in that** the step of downloading the module comprises the sub-steps of;
- encryption (32) of the module by the headend (6) with the aid of a key and an encryption algorithm specific to said module;
- splitting (34, 64) of the module by the headend (6) into a plurality of blocks of a size specific to said module extracted from a stored set of properties (66) specific to said module;
- integration (34, 64) of each of the module blocks in a specific message by the headend (6);
- broadcasting (36) of each of these messages to the decoder (14) by the headend (6);
- reception (38, 70) of these messages by the decoder (14) ;
- extraction (42, 72) of the module blocks from these messages by the security processor (16) of the decoder (14) ;
- decryption (42, 82) of the module blocks by the security processor (16);
- storage (44, 82) of the module blocks by the security processor (16) in a space of the memory (18) dedicated to said module; and
- obtaining an update code module from these blocks.

2. Updating method as claimed in claim 1, **characterised in that** the step of downloading the module further comprises the sub-steps of:
- encryption (34) of the messages containing the module blocks by the headend (6) with the aid of transport keys specific to the module; and
- decryption (42) of the messages containing the module blocks by the security processor (16).

3. Updating method as claimed in claim 1 or 2, **characterised in that** the messages containing the module blocks are selected from the ECM (Entitlement Control Message) and/or EMM type (Entitlement Management Message) based on a choice specific to the module.

4. Updating method as claimed in any one of the preceding claims, **characterised in that** it further comprises a step of activating (46) the downloaded module stored in the memory (18) by the security processor (16).

5. Updating method as claimed in claim 4, **characterised in that** the step of activating (46) the downloaded module is initiated by the security processor (16) automatically or on receipt of an activation command emitted by the decoder (14) or by the headend (6).

6. Updating method as claimed in any one of the preceding claims, **characterised in that** the module is developed and compiled in a language and with the aid of a compiler specific to the module.

7. System for updating a security processor (16) for a decoder (14) suitable for receiving and unscrambling a scrambled multimedia signal, said multimedia signal being broadcast by a headend (6) and said processor (16) having a memory (18) containing a code of an application which, when it is run or interpreted by a microprocessor, enables a set of operations necessary for unscrambling the scrambled multimedia signal to be run, said system having means for downloading at least one code module from the headend (6), **characterised in that** the module downloading means comprise:
at the level of the headend (6):
- means for encrypting the module with the aid of a key and an encryption algorithm specific to said module;
- means for splitting the module into a plurality of blocks of a size specific to said module extracted from a stored set of properties (66) specific to said module;
- means for integrating each of the module blocks in a specific message; and
- means for broadcasting each of these messages to the decoder (14);
at the level of the decoder (14), means for receiving these messages; and
at the level of the security processor (16):
- means for extracting the module blocks from these messages;
- means for decrypting the module blocks;
- means for storing the module blocks in a space of the memory (18) dedicated to said module; and
- means for obtaining an update code module from these blocks.

8. Computer programme comprising code instructions which, when this programme is run on a computer, enable the updating method to be implemented by a security processor (16) as claimed in any one of claims 1 to 6.

9. Computer programme as claimed in claim 8, **characterised in that** it comprises a sub-programme run by a headend (6) to enable sub-steps of the step of downloading the module to be implemented, consisting of:
- encrypting the module with the aid of a key and an encryption algorithm specific to said module;
- splitting the module into a plurality of blocks of a size specific to said module;
- integrating each of the module blocks in a specific message; and
- broadcasting each of these messages to the decoder (14)

10. Computer programme as claimed in claim 8 or 9, **characterised in that** it comprises a sub-programme run or interpreted by a security processor (16) to enable sub-steps of the step of downloading the module to be implemented, consisting of:
- extracting the module blocks from these messages using a block size specific to said module extracted from a stored set of properties (66) specific to said module;
- decrypting the module blocks;
- storing the module blocks in a space of the memory (18) dedicated to said module; and
- obtaining an update code module from these blocks.

11. Security processor (16), **characterised in that** it is suitable for running or interpreting the code of a sub-programme to enable sub-steps of the step of downloading the module as claimed in claim 10 to be implemented.
